# EUROPÄISCHE PATENTSCHRIFT

(11) **EP 3 492 157 B1**
(45) Veröffentlichungstag und Bekanntmachung des Hinweises auf die Patenterteilung: **10.04.2024**
(21) Anmeldenummer: 17204572.6
(22) Anmeldetag: 30.11.2017
(51) Int. Cl.: B01D 39/12, B01D 39/16, B01D 39/20

(54) **VORRICHTUNG UND VERFAHREN ZUM ABSCHEIDEN VON ÖLPARTIKELN AUS EINEM LUFTSTROM**
DEVICE AND METHOD FOR EXTRACTING OIL PARTICLES FROM AN AIR FLOW
DISPOSITIF ET PROCÉDÉ DE SÉPARATION DE PARTICULES D'HUILE D'UN FLUX D'AIR

(43) Veröffentlichungstag der Anmeldung: 05.06.2019
(73) Patentinhaber: GF Machining Solutions AG, 2504 Biel (CH)
(72) Erfinder: REINHARD, Edwin, 3362 Niederönz (CH); FAZZONE, Gianni, 4629 Fulenbach (CH)
(74) Vertreter: Li Schrag, Yue

(56) Entgegenhaltungen:
- EP-A1- 3 015 153
- EP-B1- 2 651 530
- DE-T5-112015 001 035
- US-A1- 2003 010 002
- US-A1- 2010 031 940
- US-A1- 2015 052 865
- US-B1- 6 187 073

## Beschreibung

### TECHNISCHES GEBIET

Die Erfindung betrifft eine Vorrichtung zum Abscheiden von Ölpartikeln aus einem Luftstrom. Insbesondere betrifft die Erfindung eine Verwendung einer Vorrichtung zum Abscheiden von Ölpartikeln aus einem Luftstrom von einem Spindelraum von Werkzeugmaschine abgeführten Luftstrom.

### STAND DER TECHNIK

Hochleistungsspindeln von Werkzeugmaschinen werden durch ein Öl-Luft-Gemisch geschmiert und gekühlt. Mit der Entlüftung des Spindelinnenraums wird sichergestellt, dass der durch den Spindelbetrieb anfallende Ölnebel abtransportiert wird. Die Sekundärverschmutzung wird so weggetragen und verhindert Ablagerungen im Spindelinnenraum. Mit dem Austrag des Ölnebels entweicht ausserdem Wärme und so wird eine Überhitzung des Systems verhindert.

Bekannte Verfahren und Vorrichtungen zum Abscheiden von Ölpartikeln aus dem vom Spindelinnenraum abgeführten Luftstrom erfüllen die Erwartungen nicht, weil entweder eine sehr schwache Abscheiderate erreicht wird oder die Filtermittel innert kürzester Zeit verschmutzen. Daraus resultiert ein übermässig hoher Gegendruck, was einen Rückstau im Luftstrom verursacht, was wiederum zu einer ungenügenden Entlüftung der Spindel führt. Eine Überschmierung, erhöhte Temperaturen und ein übermässiger Verschleiss sind die Folgen.

Bei einer schwachen Abscheiderate können Partikel in die Umgebungsluft gelangen, welche dem Menschen, der Umwelt und der Maschine erheblichen Schaden zufügen können.

Es geht um so genannte E-Staub/-Nebel (lungengängig <4 µm) und A-Staub/-Nebel (alveolengängig < 1 µm). Submikronpartikel werden typischerweise bei Verwendung von Hochleistungskühlschmierstoffen, welche heute unter anderem mit Additiven wie beispielsweise «Tröpfchenverkleinerern» ausgestattet sind, generiert. Hochfrequenzspindeln, Hochdrucksysteme, Mehrschichtbetrieb sowie hohe Temperaturen begünstigen das Vorkommnis dieser kritischen Partikelgrösse noch zusätzlich. Kritische Partikel sind diffundierende Partikel. Sie sind in der Lage selbst dichte Filtervliese zu durchdringen. Dies hat zur Folge, dass ein Abscheider zwar einen recht passablen Restemissionswert haben kann, die Fraktion, welche er aber nicht erfasst, gerade die Art von oben beschriebenen Partikeln enthält.

DE 20 2013 100421 beschreibt einen Ölnebelabscheider zur Reinigung von Ölnebel aus der Luft eines Arbeitsbereichs. Der Abscheider weist einen mindestens zweistufigen Filter auf, der nacheinander in einem Strömungskanal durchströmt wird. Die Ansaugung erfolgt mittels eines Gebläses im Luftweg hinter dem letzten Filter erfolgt, wobei der erste Filter im Strömungskanal als Hauptfilter ausgestaltet ist und der diesem im Luftweg nachgeordnete Filter als Nachfilter ausgestaltet ist.

DE 10 2014 224 831 beschreibt eine Luftfilteranordnung eines Ölabscheiders mit einem Gehäuse. Das Gehäuse weist einen Lufteinlass und einen Luftauslass auf, in welchem sich eine Vielzahl von Filterelementen befindet. Die Filterelemente enthalten ein Material, das in der triboelektrischen Reihe oberhalb von Stahl steht.

DE 11 2015 001 035 beschreibt einen Ölabscheider, welcher eine Einführungsöffnung for das Einführen von Luft, eine Ölfalle zum Auffangen von in der Luft enthaltenem Öl, ein Reservoir zum Speichern der aus der Ölfalle ausfliessenden Luft und eine Ausführöffnung zum Ausführen von Luft, aus der Öl entfernt werden. WO 2012 083 163 beschreibt ein Filtermedien, die für verschiedene Anwendungen geeignet sind. Das Filtermedial kann Glasfaser und Fasern enthalten, die fibrilliert sind.

US 2015/052865 A1 beschreibt einen mehrlagigen Filter zum Abtrennen von Öl und/oder Wasser aus Luft.

### DARSTELLUNG DER ERFINDUNG

Eine Aufgabe der Erfindung besteht darin, die Nachteile der aus dem Stand der Technik bekannten Vorrichtung und eine Verwendung der Vorrichtung zum Abscheiden von Ölpartikeln aus einem Luftstrom von einem Spindelraum zu überwinden.

Ausgehend von diesem Stand der Technik liegt der Erfindung die Aufgabe zugrunde, eine Vorrichtung zum Abscheiden von Ölpartikeln aus einem Luftstrom von einem Spindelraun einer Werkzeugmaschine vorzuschlagen, das ein kompaktes Design und eine verbesserte Filtration bietet, sowie eine erhöhte Lebensdauer aufweist.

Des Weiteren liegt der Erfindung die Aufgabe zugrunde eine Verwendung einer Vorrichtung zum Abscheiden von Ölpartikeln aus einem Luftstrom von einem Spindelraum einer Werkzeugmaschine vorzuschlagen, bei dem auch sehr feine Partikel aus dem Luftstrom abgeschieden werden und danach aus dem Filtermaterial abfliessen, so dass sich kein Staudruck bildet und eine fortwährende Entlüftung des Systems sichergestellt ist.

Diese Aufgabe wird erfindungsgemäss durch die im gekennzeichneten Teil der unabhängigen Patentansprüche angegebenen Merkmale gelöst.

Unter Verwendung des beschriebenen Filtermaterials und unter Berücksichtigung der definierten Anströmgeschwindigkeit gelingt es, eine effiziente Filtration und eine passive Regeneration des Filtermaterials zu erreichen. Passive Regeneration bedeutet, dass sich das Filtermedium ohne äussere Einwirkung, wie zum Beispiel Gegenstrom-Spülluft, Rüttelabreiningung oder Bürstenreinigung, reinigen kann. Dadurch kann eine kompakte und Energie-effiziente Vorrichtung zum Abscheiden von Ölpartikeln aus dem Luftstrom realisiert werden.

Besondere Ausführungsarten der Erfindung sind in den abhängigen Ansprüchen offenbart.

Gemäss der Filtervorrichtung umfasst ein Filterelement zum Abscheiden von Ölpartikeln aus dem Luftstrom eine durchgehende Seitenwand, einen durchgehend geschlossen Boden und einen Deckel. Die Seitenwand ist zwischen dem Boden und dem Deckel befestigt. In der Seitenwand ist ein Filtermaterial aufgenommen, welches aus einer Fasermischung von synthetischen Fasern und Glasfasern besteht. Zudem ist das Filtermaterial so ausgewählt dass bei der Anströmung des Luftstroms durch das Filtermaterial die Ölpartikel aus dem Luftstrom auf der Oberfläche des Filtermaterials zu Tropfen agglomerieren und die Tropfen nach unten abfliessen. Damit werden die Partikel mit einem Durchmesser im Bereich von Mikrometer aus dem Luftstrom zurückgehalten. Der Abscheideprozess funktioniert passiv ohne externe Energie und der Druckverlust über das Filterelement bleibt über lange Zeit stabil. Da die Ölpartikel agglomerieren und sich anschließend drainieren lassen, wird eine Sättigung des Filtermaterials durch Ölpartikel in einer kurzen Betriebszeit vermieden und daraus eine längere Lebensdauer und bessere Filtration des Filterelements erreicht. Des Weiteren trägt die passive Filterfunktion zu einem niedrigen Energieverbrauch der Vorrichtung bei.

Gemäss einer Ausgestaltung weist die Seitenwand ein Stützelement zum Stützen des Filtermaterials auf, welches vorzugsweise aus einem Streckgitter Innen und/oder einem Streckgitter Aussen gebildet wird. Das Streckgitter Innen und das Streckgitter Aussen bestehen vorzugsweise aus Streckmetall oder Lochblech. Es ist möglich dass das Stützelement aus anderen Materialien und Formen ausgestaltet wird.

Das Filtermaterial besitzt ein Flächengewicht von 90-150g/m². und eine Dicke im Bereich von 0.1-1mm, bevorzugt im Bereich von 0.1-0.69 mm.

Gemäss einer Ausgestaltung besitzt das Filtermaterial eine Luftdurchlässigkeit von 80-250 m³/m²/h bei 200pa, bevorzugt von 120-150 m³/m²/h bei 200pa. In einer vorteilhaften Variante ist das Filtermaterial mit einer Luftdurchlässigkeit von 130 m³/m²/h bei 200pa gewählt.

Gemäss einer Ausgestaltung hat das Filtermaterial einen Oberflächenwiederstand von mindestens 10¹² Ohm. Das hat den Vorteil, dass durch die Luft-Friktion nicht unnötig statische Ladungen innerhalb des Filtermediums erzeugt werden. Die Ladungen begünstigen das Anhaften von Schwebpartikel und können die Oberflächenspannung von Flüssigkeiten verändern, sodass ein Abfliessen erschwert werden kann.

Das Filterelement hat die Gestalt eines Hohlzylinders. Das Filterelement kann eine andere Form einnehmen (nicht erfindungsgemäß), zum Beispiel, konisch. Ein konisches Element, insbesondere wenn es hängend angebracht wird, begünstigt, das Abfliessen eines Tropfens.

Gemäss einer Ausgestaltung weist das Filtermaterial eine Vielzahl von Falten zur Vergrösserung der Filterfläche auf. In einer bevorzugten Variante verlaufen die Falten in einer vertikalen Richtung zum Begünstigen des Agglomerierens der Ölpartikel zu Tropfen und des Abfliessen der Tropfen.

Gemäss einer Ausgestaltung entspricht die Tiefe der Falten in die radiale Richtung 10-30mm. In einer bevorzugten Variante ist eine Tiefe von 25 mm gewählt. In einer Variante, ist der Faltenabstand in Abhängigkeit vom inneren Durchmesser des Filtermaterials und der Dicke des Materials gewählt.

In einer Ausführungsform ist das Filtermaterial mit Verstärkungselementen ausgestaltet um mehr mechanische Stabilität des Filtermaterials zu gewinnen.

In einer Ausführungsform ist das Filterelement so dimensioniert, dass das Verhältnis zwischen der Höhe des Filterelements und dem Aussendurchmesser der Seitenwand des Filterelements 1 oder grösser ist, um ein Optimum zwischen mechanischer Stabilität des Filterelements und Effizienz der Filtration zu erlangen.

Die Vorrichtung zum Abscheiden von Ölpartikeln aus dem Luftstrom von einem Spindelraum einer Werkzeugmaschine umfasst ein Filterelement, ein Gehäuse, einen Einlass für den befrachteten Luftstrom, einen Auslass für den abgeschiedenen Luftstrom und einen Ablass für Öl. Eine Anströmgeschwindigkeit des Luftstromes ist so dimensioniert dass bei der Anströmung des Luftstroms durch das Filtermaterial die Ölpartikel aus dem Luftstrom zu Tropfen agglomerieren und die Tropfen nach unten abfliessen. Die Anströmgeschwindigkeit ist ein relevanter Faktor um das Agglomerieren der Ölpartikel zu ermöglichen.

Gemäss der erfindungsgemässen Vorrichtung ist ein Diffusor zwischen der Seitenwand des Gehäuses und dem Filterelement angeordnet. Dadurch wird der Luftstrom über den Diffusor möglichst gleichmässig in die Expansionskammer, in welcher sich auch das Filterelement befindet, geführt und die Anströmgeschwindigkeit nachreguliert. Hieraus resultiert ein optimales Verhältnis zwischen Filterfläche und die Anströmgeschwindigkeit.

Gemäss einer Ausgestaltung der erfindungsgemässen Vorrichtung liegt die Anströmgeschwindigkeit im Bereich von 0.1-2.5m/min, bevorzugt im Bereich von 0.1-0.55 m/min. Die Anströmgeschwindigkeit ausserhalb dieses Bereichs wirkt negativ auf die Effizienz der Filtration durch eine Verhinderung des Agglomerierens der Ölpartikel. Da die Aerosole zu tief in das Filtermedium penetrieren können, wird die Drainage ineffizienter und nimmt der Differenzdruck über das Filterelement zu.

Die Erfindung betrifft die Verwendung der Vorrichtung zum Abscheiden von Ölpartikeln aus dem von Spindelraum einer Werkzeugmaschine abgeführten Luftstrom. Eine Ausführungsform betrifft die Verwendung der Vorrichtung zum Abscheiden von Ölpartikeln aus einem von Spindelraum einer Werkzeugmaschine abgeführten

Luftstrom, wobei der befrachtete Luftstrom in eine Expansionskammer geleitet wird, in der sich ein plissiertes, vertikal angeordnetes Filtermaterial aus einer Fasermischung von synthetischen Fasern und Glasfasern befindet. Das Filtermaterial und die Anströmgeschwindigkeit des Luftstroms sind so gewählt dass bei der Anströmung des Luftstroms durch das Filtermaterial die Ölpartikel aus dem Luftstrom auf der Oberfläche des Filtermaterials zu Tropfen agglomerieren und die Tropfen nach unten abfliessen.

Der befrachtete Luftstrom wird mit einer Anströmgeschwindigkeit im Bereich von 0.1-2.5 m/min durch das Filtermaterial geleitet.

In einer Variante hat das Filtermaterial eine Berstfestigkeit nach Mullen von 300 kPa.

In einer Ausführungsform hat das Filtermaterial eine Temperaturbeständigkeit von 65 °C bis 80 °C.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen
- Figur 1: eine perspektivische Explosionsansicht der Vorrichtung zum Abscheiden von Ölpartikeln aus dem Luftstrom
- Figur 2: eine perspektivische Explosionsansicht des Filterelements
- Figur 3: eine perspektivische Seitenansicht des Filterelements
- Figur 4: eine perspektivische Draufansicht des Filterelements
- Figur 5: einen gemessenen Druckverlauf mit dem Abscheider gemäss Figur 1

### WEGE ZUR AUSFÜHRUNG DER ERFINDUNG

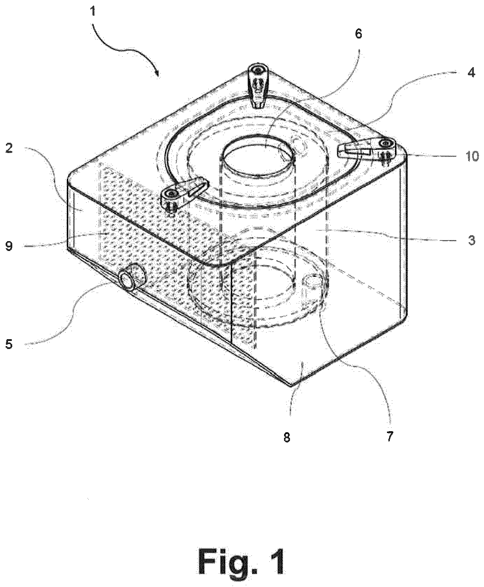

Figur 1 zeigt in einer perspektivischen Explosionsansicht eine Vorrichtung 1 zum Abscheiden von Ölpartikeln aus einem Luftstrom. Die Vorrichtung weist ein Gehäuse 2 mit einer Öffnung auf der Oberseite auf, damit ein Filterelement 3 auswechselbar durch die Öffnung im Gehäuse angeordnet werden kann. Auf der Oberseite des Gehäuses und neben der Öffnung sind mehrere Verschlusselemente 10 vorgesehen um das Filterelement im Gehäuse zu halten. Die Verschlusselemente erlauben ein stabiles Halten des Filterelements im Gehäuse während dem Betrieb und eine einfache Montage des Filterelements.

Auf einer Seitenwand des Gehäuses 2 ist ein Einlass 5 für belastete Luft angeordnet. Auf dem Deckel des Filterelements ist ein Auslass 6 vorgesehen, durch welchen der gereinigte Luftstrom das Gehäuse 2 verlässt. Im Boden 8 des Gehäuses 2 ist ein Ablass 7 für das abgeschiedene Öl vorgesehen, der durch ein nicht dargestelltes Ventil periodisch geöffnet wird um das gesammelte Öl ausfliessen zu lassen. In der Nähe des Einlasses 5 ist ein Lochblech 9 als Diffusor für die Verteilung der eintretenden, belastenden Luft im Gehäuse angeordnet.

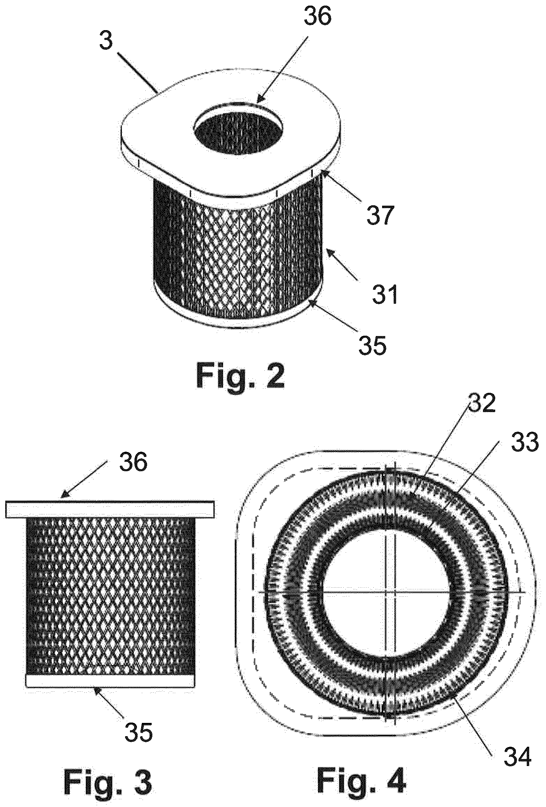

Figur 2 zeigt das Filterelement 3, welches die Gestalt eines Hohlzylinders hat. In der Seitenwand ist ein Filtermaterial 32 aufgenommen, welches vertikal im Boden 35 des Filterelements fixiert ist. Das Filtermaterial 32 ist innen und aussen durch ein Streckgitter 33, 34 gestützt, welche beispielsweise aus geflochtenem Draht, Streckmetall oder Lochblech bestehen.

Figur 4 zeigt eine Draufansicht der Anordnung des Filtermaterials 32, Streckgitter Innen 33 und Streckgitter Aussen 34. Durch die Unterstützung der Streckgitter Innen 33 und Streckgitter Aussen 34 wird die elastische Deformation des Filtermaterials durch Anströmung des Luftstromes massive reduziert oder gar vermieden.

Das Filterelement 3 weist unten einen durchgehend geschlossenen Boden auf. Die Wahl des Materials für den Boden ist abhängige von der Anwendung. Für die in der Figur 2 dargestellte Ausführungsform ist der Boden aus galvanisch verzinktem Stahl.

Des Weiteren weist das Filterelement einen mit dem Filtermaterial und den Streckgitter fest verbundenen Deckel 36, auf welchem der Auslass 6 für den gereinigten Luftstrom angeordnet ist. Der Deckel kann wie in Figur 2 gezeigt eine bestimmte Form aufweisen um die Montage des Filterelements in das Gehäuse 2 zu erleichtern. Auf der Unterseite des Deckels ist eine Dichtung 37 vorgesehen, welche als Dichtung zwischen dem Filterelement und dem Gehäuse dient.

Ein plissiertes Filtermaterial wird verwendet um eine optimale Filtration zu erzielen. Plissiert bedeutet, dass das flächige Filtermaterial 32 zickzackförmig gefaltet ist. Das in Figuren 2, 3 und 4 dargestellte Filtermaterial weist mehreren Falten auf. Das Filtermaterial besteht aus einer Fasermischung von synthetischen Fasern und Glasfasern. In einer bevorzugten Variante hat das Filtermaterial eine Dicke von 0,69 mm und eine Luftdurchlässigkeit von 130 m³/m²/h bei einem Druck von 200 Pa und einen Oberflächenwiderstand von mindestens 10¹² Ohm.

Eine bevorzugte Ausführungsform der Vorrichtung 1 wird so betrieben, dass der befrachtete Luftstrom mit einer Anströmgeschwindigkeit von 0.55 m/min von aussen nach innen durch das Filtermaterial 32 fliesst. Vorteilhafterweise hat das Filtermaterial 32 zudem eine Berstfestigkeit nach Mullen von 300 kPa und eine Temperaturbeständigkeit von 65 °C bis 80 °C.

Die in Figuren 2, 3, und 4 dargestellte Ausführungsform ist so dimensioniert, dass die Höhe des Filterelements 150 mm beträgt und der Aussendurchmesser der Seitenwand 138 mm ist. Figur 3 und Figur 4 zeigen jeweils eine perspektivische Seitenansicht und Draufsicht des Filterelements.

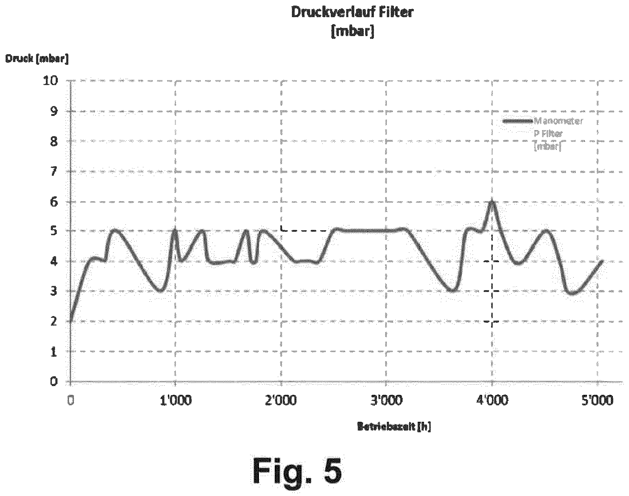

Figur 5 zeigt eine Messung vom Druckverlauf der Vorrichtung in der Abhängigkeit von der Betriebszeit. Mit der vorangehend beschriebenen Vorrichtung 1 und Betriebsweise wurden Messungen an einer Werkzeugmaschine MIKRON HPM 450U bei einer Spindeldrehzahl von 20'000 min⁻¹ durchgeführt. Die drei Lager wurden mittels MOTOREX SPINDLE LUBE ISO VG 68 HYPER 15/13/10 geschmiert, wobei sich die zugeführte Menge auf 0,0009 l/h belief. Daraus resultierte eine Konzentration, abhängig vom abtransportierten Volumenstrom, von 0.0631 bis 0.1091 ml/m³. Dies entspricht einer durchschnittlichen Belastung von 99,570 mg/m³, mit der die mit Ölnebel belastete Abluft, die durch das passive Überdrucksystem bei der Lagerschmierung erzeugt wurde, der Vorrichtung 1 während insgesamt 5000 Stunden zugeführt wurde. Dabei arbeitete die Vorrichtung 1 als Entlüftungsorgan und besass keinen eigenen Ventilator für den Ausgleich der Druckdifferenz über das Filterelement 3. Im Abluftstrom nach der Vorrichtung 1 wurden noch lediglich 0,195 mg/m³ gemessen, was einer Reduktion von 500:1 entspricht. Figur 5 zeigt ein Diagramm, wobei die Ordinate die Druckdifferenz über das Filterelement in mbar und die Abszisse die Betriebsdauer in Stunden zeigt. Man sieht deutlich, dass die Druckdifferenz den Wert von 6 mbar nie überstieg.

Der Abscheideprozess funktionierte somit über 5000 Stunden passiv, also ohne einbringen einer externen Energie wie Druckluft, Strom usw., wobei der Druckverlust über das Filterelement stabil unter 6 mbar blieb. Es hat sich im Betrieb gezeigt, dass der Ölnebel im Filtermaterial zu Tropfen agglomerierte, die nach unten abflossen, ohne das Filtermaterial in der Messperiode zuzusetzen, so dass man von einem selbst regenerierenden Prozess sprechen kann.

### Bezugszeichenliste

- 1: Vorrichtung zum Abscheiden von Ölpartikel
- 2: Gehäuse
- 3: Filterelement
- 4: Deckel
- 5: Einlass für belastete Luft
- 6: Auslass für saubere Luft
- 7: Ablass für Öl
- 8: Boden des Filterelements
- 9: Diffusor
- 10: Verschlusselement
- 31: Seitenwand
- 32: Filtermaterial
- 33: Streckgitter Innen
- 34: Streckgitter Aussen
- 35: Boden des Gehäuses
- 36: Deckel
- 37: Dichtung

## Patentansprüche

1. Vorrichtung zum Abscheiden von Ölpartikeln aus dem von Spindelraum einer Werkzeugmaschine abgeführten Luftstrom umfassend ein Filterelement umfassend
eine durchgehende Seitenwand (31), in welcher ein Filtermaterial aufgenommen ist, einen durchgehend geschlossen Boden (35) und einen Deckel (36), wobei die Seitenwand zwischen dem Boden und dem Deckel befestigt ist, wobei auf dem Deckel ein Auslass (6) für den gereinigten Luftstrom angeordnet ist, wobei das Filterelement die Gestalt eines Hohlzylinders hat, wobei das Filtermaterial aus einer Fasermischung von synthetischen Fasern und Glasfasern besteht, wobei das Filtermaterial und die Anströmungsgeschwindigkeit des Luftstroms so ausgewählt sind, dass bei der Anströmung des Luftstroms durch das Filtermaterial die Ölpartikeln aus dem Luftstrom im Filtermaterial auf der Oberfläche des Filtermaterials zu Tropfen agglomerieren und die Tropfen nach unten abfliessen, wobei das Filtermaterial ein Flächengewicht von 90-150g/m² und eine Dicke im Bereich von 0.1mm-1mm besitzt,
**dadurch gekennzeichnet dass** die Vorrichtung
ein Gehäuse (2) mit einer Expansionskammer, einen Einlass für den befrachteten Luftstrom (5) einen Auslass für abgeschiedene Luftstrom (6) und einen Ablass für Öl (7) aufweist, wobei das Filterelement (3) in der Expansionskammer des Gehäuse angeordnet ist, wobei ein Lochblech als Diffusor zwischen der Gehäuseseitenwand und dem Filterelement (3) angeordnet ist, wobei das Gehäuse eine Öffnung auf der Oberseite des Gehäuses aufweist, damit das Filterelement auswechselbar durch die Öffnung im Gehäuse angeordnet werden kann, wobei auf der Oberseite des Gehäuses und neben der Öffnung mehrere Verschlusselemente (10) vorgesehen sind um das Filterelement im Gehäuse zu halten.

2. Vorrichtung nach Anspruch 1, **dadurch gekennzeichnet dass** die Seitenwand ein Streckgitter Innen (33) und/oder ein Streckgitter Aussen (34) zum Stützen des Filtermaterials aufweist, wobei die Streckgitter Innen und Streckgitter Aussen aus Streckmetall oder Lochblech bestehen.

3. Vorrichtung nach Anpsruch 1 oder 2, **dadurch gekennzeichnet dass** das Filtermaterial eine Dicke im Bereich von 0.1mm-0.69 mm besitzt.

4. Vorrichtung nach einem der Ansprüche 1 bis 3, **dadurch gekennzeichnet dass** das Filtermaterial mit einer Vielzahl von Falten ausgestattet ist.

5. Vorrichtung nach Anspruch 4, **dadurch gekennzeichnet dass** die Tiefe der Falten in die radiale Richtung zwischen 10-30 mm ist, bevorzugt von 25 mm.

6. Verwendung einer Vorrichtung nach einem der Ansprüche 1 bis 5 zum Abscheiden von Ölpartikeln aus einem von Spindelraum einer Werkzeugmaschine abgeführten Luftstrom, wobei der befrachtete Luftstrom in die Expansionskammer geleitet wird, in der sich das vertikal angeordnete Filterelement befindet, wobei das Filtermaterial und eine Anströmgeschwindigkeit des Luftstroms durch das Filtermaterial so gewählt sind, dass bei der Anströmung des Luftstroms durch das Filtermaterial die Ölpartikel aus dem Luftstrom im Filtermaterial auf der Oberfläche des Filtermaterials zu Tropfen agglomerieren und die Tropfen nach unten abfliessen, wobei der Luftstrom mit einer Anströmgeschwindigkeit im Bereich von 0.1-2.5m/min durch das Filtermaterial geleitet wird.

## Claims

1. Device for separating oil particles from the air flow discharged from the spindle chamber of a machine tool, comprising a filter element comprising
a continuous side wall (31) in which a filter material is received, a continuously closed bottom (35) and a cover (36), wherein the side wall is fastened between the bottom and the cover, wherein an outlet (6) for the cleaned air flow is arranged on the cover, wherein the filter element has the shape of a hollow cylinder, wherein the filter material consists of a fibre mixture of synthetic fibres and glass fibres, wherein the fibre material and the incident-flow speed of the air flow are selected such that, during the incident flow of the air flow through the filter material, the oil particles from the air flow in the filter material agglomerate on the surface of the filter material to form droplets and the droplets flow away downwards, wherein the filter material has a weight per unit of area of 90-150 g/m² and a thickness in the range from 0.1 mm-1 mm,
**characterized in that** the device
has a housing (2) with an expansion chamber, an inlet for the loaded air flow (5), an outlet for the separated-off air flow (6) and a drain for oil (7), wherein the filter element (3) is arranged in the expansion chamber of the housing, wherein a perforated sheet is arranged as diffuser between the housing side wall and the filter element (3), wherein the housing has an opening on the upper side of the housing so that the filter element can be exchangeably arranged in the housing by way of the opening, wherein multiple closure elements (10) are provided on the upper side of the housing and next to the opening in order to hold the filter element in the housing.

2. Device according to Claim 1, **characterized in that** the side wall has an expanded mesh on the inside (33) and/or an expanded mesh on the outside (34) to support the filter material, wherein the expanded mesh on the inside and the expanded mesh on the outside consist of expanded metal or perforated sheet.

3. Device according to Claim 1 or 2, **characterized in that** the filter material has a thickness in the range from 0.1 mm-0.69 mm.

4. Device according to one of Claims 1 to 3, **characterized in that** the filter material is equipped with a multiplicity of folds.

5. Device according to Claim 4, **characterized in that** the depth of the folds in the radial direction is between 10-30 mm, preferably 25 mm.

6. Use of a device according to one of Claims 1 to 5 for separating oil particles from an air flow discharged from the spindle chamber of a machine tool, wherein the loaded air flow is conducted into the expansion chamber in which the vertically arranged filter element is located, wherein the filter material and an incident-flow speed of the air flow through the filter material are selected such that, during the incident flow of the air flow through the filter material, the oil particles from the air flow in the filter material agglomerate on the surface of the filter material to form droplets and the droplets flow away downwards, wherein the air flow is conducted through the filter material at an incident-flow speed in the range from 0.1-2.5 m/min.

## Revendications

1. Dispositif pour séparer des particules d'huile du courant d'air évacué de la chambre de broche d'une machine-outil, comprenant un élément filtrant comprenant une paroi latérale continue (31), dans laquelle est logé un matériau filtrant, un fond (35) fermé en continu et un couvercle (36), la paroi latérale étant fixée entre le fond et le couvercle, une sortie (6) pour le courant d'air épuré étant agencée sur le couvercle, l'élément filtrant ayant la forme d'un cylindre creux, le matériau filtrant étant constitué d'un mélange fibreux de fibres synthétiques et de fibres de verre, le matériau filtrant et la vitesse d'écoulement du courant d'air étant choisis de telle sorte que, lors de l'écoulement du courant d'air à travers le matériau filtrant, les particules d'huile provenant du courant d'air dans le matériau filtrant s'agglomèrent en gouttes sur la surface du matériau filtrant et les gouttes s'écoulent vers le bas, le matériau filtrant possédant un grammage de 90 à 150 g/m² et une épaisseur dans la plage de 0,1 mm à 1 mm,
**caractérisé en ce que** le dispositif
présente un boîtier (2) avec une chambre d'expansion, une entrée pour le courant d'air chargé (5), une sortie pour le courant d'air séparé (6) et une évacuation pour l'huile (7), l'élément filtrant (3) étant agencé dans la chambre d'expansion du boîtier, une tôle perforée étant agencée en tant que diffuseur entre la paroi latérale du boîtier et l'élément filtrant (3), le boîtier présentant une ouverture sur le côté supérieur du boîtier avec laquelle l'élément filtrant peut être agencé de manière interchangeable à travers l'ouverture dans le boîtier, plusieurs éléments de fermeture (10) étant prévus sur le côté supérieur du boîtier et à côté de l'ouverture afin de maintenir l'élément filtrant dans le boîtier.

2. Dispositif selon la revendication 1, **caractérisé en ce que** la paroi latérale présente un grillage déployé intérieur (33) et/ou un grillage déployé extérieur (34) pour supporter le matériau filtrant, le grillage déployé intérieur et le grillage déployé extérieur étant constitués de métal déployé ou de tôle perforée.

3. Dispositif selon la revendication 1 ou 2, **caractérisé en ce que** le matériau filtrant possède une épaisseur dans la plage de 0,1 mm à 0,69 mm.

4. Dispositif selon l'une quelconque des revendications 1 à 3, **caractérisé en ce que** le matériau filtrant est pourvu d'une pluralité de plis.

5. Dispositif selon la revendication 4, **caractérisé en ce que** la profondeur des plis dans la direction radiale est comprise entre 10 et 30 mm, de préférence 25 mm.

6. Utilisation d'un dispositif selon l'une quelconque des revendications 1 à 5 pour séparer des particules d'huile d'un courant d'air évacué de la chambre de broche d'une machine-outil, le courant d'air chargé étant dirigé vers la chambre d'expansion dans laquelle se trouve l'élément filtrant agencé verticalement, le matériau filtrant et une vitesse d'écoulement du courant d'air à travers le matériau filtrant étant choisis de telle sorte que, lors de l'écoulement du courant d'air à travers le matériau filtrant, les particules d'huile provenant du courant d'air dans le matériau filtrant s'agglomèrent en gouttes sur la surface du matériau filtrant et les gouttes s'écoulent vers le bas, le courant d'air s'écoulant à une vitesse d'écoulement dans la plage de 0,1 à 2,5 m/min à travers le matériau filtrant.
